# EUROPÄISCHE PATENTSCHRIFT

(11) **EP 1 136 178 B1**
(45) Veröffentlichungstag und Bekanntmachung des Hinweises auf die Patenterteilung: **14.05.2003**
(21) Anmeldenummer: 01107015.8
(22) Anmeldetag: 21.03.2001
(51) Int. Cl.: B23Q 35/06, B23Q 35/42, B23Q 16/00, B23Q 35/10

(54) **Vorrichtung zum Bearbeiten von Hohlprofilen**
Device for working upon an hollow profile
Dispositif pour l'usinage des profilés creux

(30) Priorität: 22.03.2000 DE 10013994
(43) Veröffentlichungstag der Anmeldung: 26.09.2001
(73) Patentinhaber: Eisenbach, Bernhard, D-65611 Brechen (DE)
(72) Erfinder: Eisenbach, Bernhard, D-65611 Brechen (DE)
(74) Vertreter: Müller, Eckhard, Dr.

(56) Entgegenhaltungen:
- EP-A- 0 275 775
- EP-A- 0 493 666
- EP-A- 0 795 378
- EP-A- 0 934 800

## Beschreibung

Die Erfindung betrifft eine Vorrichtung zum Bearbeitung von Hohlprofilen oder dgl. stabförmigen Werkstücken mit einer an einem Maschinengestell über mehrere Schlitten verfahrbaren Bearbeitungseinheit und einer Kopiereinrichtung.

Derartige Vorrichtungen dienen zur Bearbeitung von Tür- oder Fensterrahmen. Diese Elemente sind aus mehreren Hohlprofilen zusammengesetzt und müssen zur Aufnahme von Schlössern oder Beschlägen mit Bohrungen oder Durchbrüchen, wie zum Beispiel Schloßkasten, Drückerloch, Öffnung für den Schließzylinder, versehen sein. Das Einbringen der Bohrungen oder der Durchbrüche erfolgt in der Regel durch spanende Bearbeitung wie Bohren und Fräsen. Möglich sind auch Schneidverfahren, zum Beispiel mit Plasma oder Laser.

Die Führung des Bearbeitungswerkzeuges erfolgt meist mittels einer Kopiereinrichtung und einer in die Vorrichtung einzulegenden Schablone, welche die Kontur des herzustellenden Durchbruches aufweist. Die Schablone wird von einem Kopierstift abgetastet. Die Bewegung des Kopierstiftes in der Schablone wird auf das Bearbeitungswerkzeug übertragen, meist im Maßstab 1:1. Das Werkzeug erzeugt somit einen Durchbruch, der in Größe und Form dem Durchbruch der Schablone entspricht. Durch "Storchschnabeln" sind auch Verkleinerungen oder Vergrößerungen möglich. Soll z.B. ein Schlüsselloch ausgefräst werden, so folgt der Bearbeiter mit dem Kopierstift dem Muster des Schlüssellochs in der Schablone. Die Fräsmaschine wird dann von der Kopiereinrichtung entsprechend geführt und bringt ein identisch geformtes Schlüsselloch in das zu bearbeitende Hohlprofil.

Eine solche Vorrichtung zur mehrseitigen Bearbeitung von Hohlprofilen ist aus der EP 934 800 A1 bekannt. Diese Literaturstelle behandelt im wesentlichen die Aufspanneinrichtung für die Hohlprofile und bildet den Oberbegriff des Anspruchs 1.

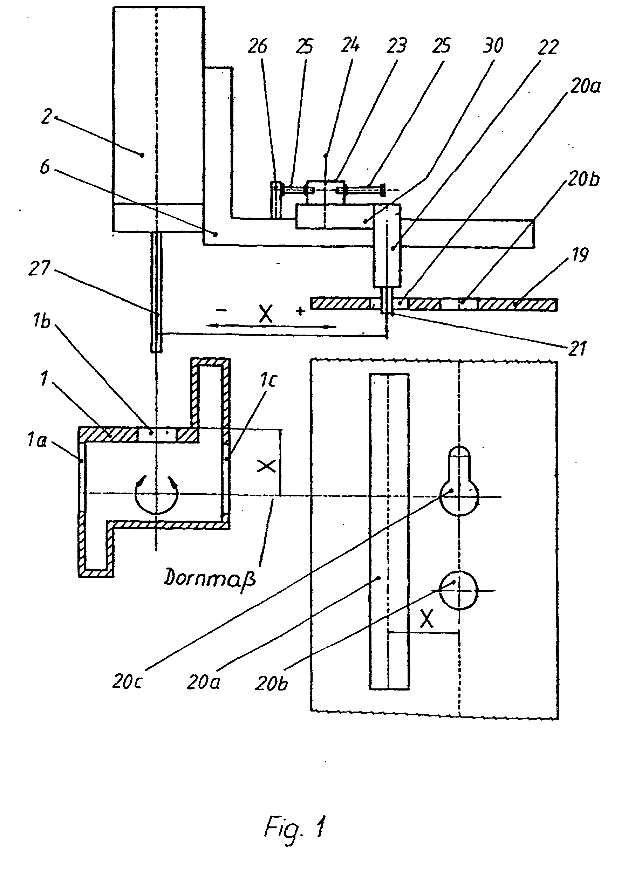

Abhängig von dem jeweiligen Hersteller der Beschläge für die Fenster oder Türrahmen ändert sich das sogenannte Dornmaß X, welches den Abstand zwischen dem Beschlag und der Mitte des Drückerlochs festlegt, wie dies in Figur 1 dargestellt ist. Deshalb werden für Beschläge unterschiedlicher Hersteller auch unterschiedliche Schablonen benötigt, was einen hohen Aufwand an Schablonen zufolge hat. Der Wechsel der Schablonen erfordert außerdem entsprechende Umrüstzeiten und verursacht Stillstandszeiten in der Produktion.

Davon ausgehend liegt der Erfindung die Aufgabe zugrunde, eine Bearbeitungseinheit der eingangs genannten Art dadurch zu verbessern, daß Hohlprofile für die Beschläge unterschiedlicher Hersteller, insbesondere für Beschläge mit unterschiedlichen Dornmaßen X, mit ein und derselben Schablone hergestellt werden können.

Diese Aufgabe wird erfindungsgemäß gelöst von einer Vorrichtung mit den Merkmalen des Anspruchs 1. Ausführungen der Erfindung sind Gegenstände von Unteransprüchen.

Mit der Erfindung können mit einer einzigen Schablone unterschiedliche Einfräsungen oder Einbohrungen nach den Vorgaben unterschiedlicher Hersteller erzeugt werden. Der sonst übliche Schablonenwechsel kann entfallen. Die unterschiedlichen Dornmaße - die sich in einem unterschiedlichen Abstand des Bearbeitungswerkzeuges vom Abtastelement auswirken - werden durch das erfindungsgemäße verstellbare System ausgeglichen. Mit wenigen Handgriffen kann der Benutzer die Vorrichtung auf ein anderes Dornmaß einstellen. Die Schablone muß nicht gewechselt werden, ebensowenig muß das Hohlprofil gewechselt oder umgespannt werden. Dadurch wird die Bearbeitungszeit wesentlich verkürzt. Umrüstzeiten und Maschinenstillstandszeiten entfallen.

Besonders geeignet ist die Erfindung zum Einbringen von Durchbrechungen auf einer oder auf mehreren Seiten des Hohlprofils. Dies ist die "klassische" Bearbeitung mit Schablonen. Die Erfindung kann aber auch zu anderen Bearbeitungsverfahren eingesetzt werden, wie z.B. zum Schleifen, Honen, Lackieren oder Anbringen von Farbmustern oder -markierungen.

In einer Ausführung der Erfindung ist als Mehrfachanschlag ein Revolveranschlag oder Revolverkopf vorgesehen, an dem sich mehrere, gegebenenfalls verstellbare Anschlagelemente befinden, welche bei entsprechender Positionierung mit einem Gegenanschlag in Wirkstellung treten. Bei einem sechsflächigen Revolveranschlag können dann sechs unterschiedliche Stellungen der beiden gegeneinander verschiebbaren Elemente zueinander realisiert werden. Eine Federbelastung der beiden Bauteile gegeneinander oder eine ähnliche Vorrichtung zum Einrastenlassen oder Festklemmen kann vorgesehen sein, um die beiden Schlitten im gewünschten Abstand zueinander zu halten. Der erfindungsgemäße Revolveranschlag erlaubt bei entsprechender Beschriftung eine eindeutige und fehlerfreie Einstellung der Vorrichtung auf die unterschiedlichen Dornmaße der unterschiedlichen Hersteller. Falscheinstellungen werden so vermieden. Verstellungen eines Hebels um 60° sind relativ eindeutige Bewegungen, die kaum unbemerkt falsch gemacht werden können.

In einer bevorzugten Ausführung der Erfindung weist der Mehrfachanschlag verstellbare Anschlagschrauben auf, welche mit dem Gegenanschlag in Wirkstellung treten. Ein solcher Anschlag kann leicht auf beliebige Werte eingestellt werden und hält die voreingestellten Werte auch im Einsatz in rauher Betriebsumgebung zuverlässig ein.

In einer Ausführung der Erfindung erfolgt die Einstellung der unterschiedlichen Abstände zwischen Abtasteinheit und Bearbeitungseinheit über ein Rastsystem. So kann ein beweglicher Schlitten auf einem festen Schlitten geführt sein (beispielsweise auf einer Prismenführung) oder ein Schiebeelement kann gleitend über ein zweites Schiebeelement bewegbar sein, wobei Rastmöglichkeiten vorgesehen sind, die für Fixierungen der beiden Elemente in unterschiedlichen Lagen zueinander sorgen.

Die Rastungen können z.B. von einer Reihe von Einfräsungen, Nuten oder Durchbrüchen gebildet sein, in die eine entsprechende (gegengleiche) federbelastete Nase oder ein Stäbchen am anderen Bauteil einschnappen kann. Dadurch kann auf einfache Weise eine sichere steife Befestigung der beiden Bauteile gegeneinander in den jeweils gewünschten Abständen erreicht werden. Möglich sind auch Schraubbefestigungen, wobei eine Schraube in einem Bauteil und mehrere Schraublöcher im anderen Bauteil vorgesehen sind. Je nachdem, in welchem der Löcher die Schraube eingeschraubt ist, ist der gewünschte Abstand eingestellt.

In einer weiteren Ausführung der Erfindung können zwei oder mehr Bearbeitungseinheiten vorgesehen sein, die getrennt oder zusammen verfahrbar sein können. Jeder der Bearbeitungseinheiten kann ein eigener Kopierstift zugeordnet sein, wobei die zwei oder mehr Kopierstifte bevorzugt mit einem gemeinsamen Mehrfachanschlag so zusammenwirken, daß der Abstand zwischen den Bearbeitungseinheiten und den jeweiligen zugeordneten Kopiereinrichtungen gleichzeitig (parallel) verstellt wird. So können also zwei und mehr Bearbeitungseinheiten, zum Beispiel ein Bohrer und ein Fräser, gleichzeitig auf das jeweilige Dornmaß umgestellt werden. Dabei kann eine Schablone vorgesehen sein, die beide Geräte führt, oder es können zwei oder mehr Schablonen vorgesehen sein, die gleichzeitig abgetastet werden.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, unabhängig von ihrer Zusammenfassung in den Ansprüchen oder deren Rückbeziehung.

Es zeigen:
- Figur 1: schematisch eine erfindungsgemäße Vorrichtung mit einem zu bearbeitenden Hohlprofil und einer Schablone und
- Figuren 2 und 3: eine Ausführung einer erfindungsgemäßen Vorrichtung in Seitenansicht und in Draufsicht.

Figur 1 zeigt links unten ein zu bearbeitendes Hohlprofil 1, hier z.B. einen Fensterrahmen, das an drei Seiten mit je einem Durchbruch 1a, 1b und 1c zu versehen ist. Das Dornmaß X ist eingezeichnet.

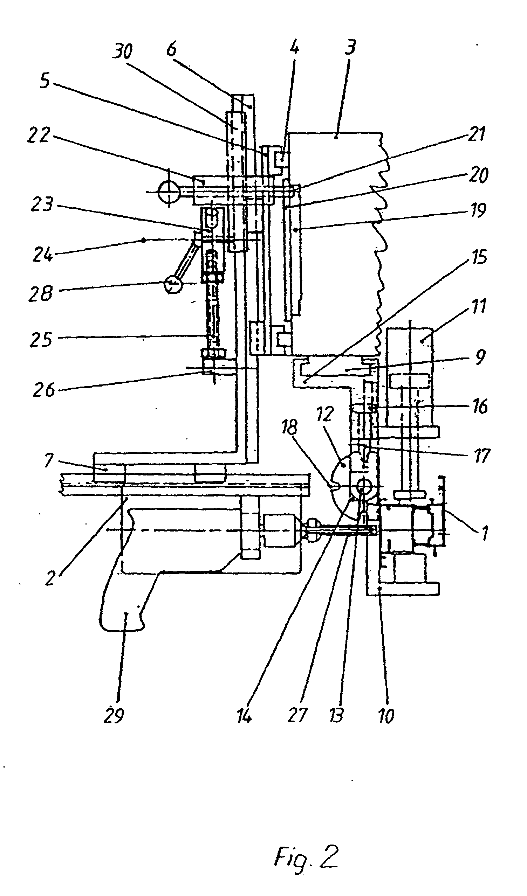

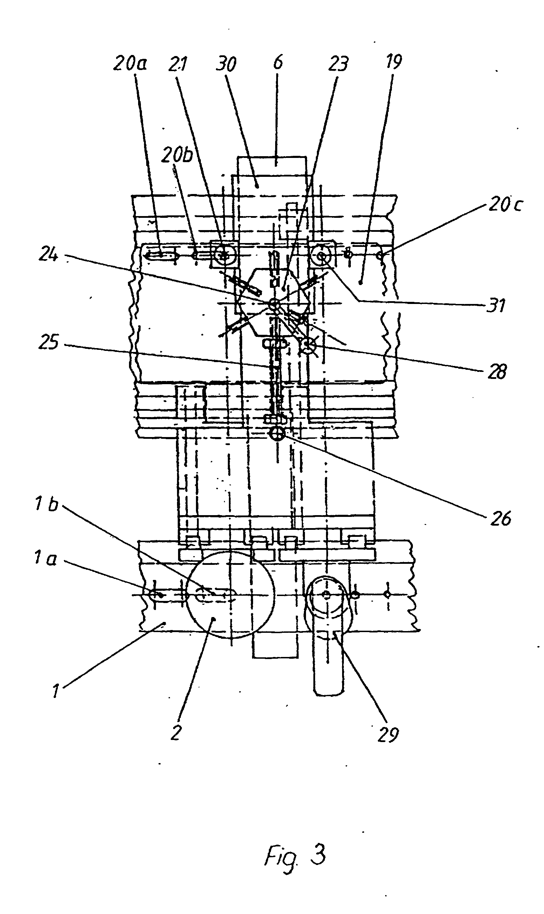

Fig. 1 zeigt oben schematisch eine erfindungsgemäße Vorrichtung zum Einbringen der Durchbrüche 1a, 1b und 1c. Die drei Durchbrüche 1a, 1b und 1c werden nacheinander von einem darüber gezeigten motorbetriebenen Fräskopf 2 mit einem Werkzeug 27 (hier einen Fräser) von oben her eingebracht. Dazu wird das Hohlprofil 1 in drei unterschiedlichen Lagen unterhalb des Werkzeugs 27 eingespannt; diese 270° - Drehbewegung wird vom runden Pfeil im Hohlprofil 1 anzeigt. Der Fräskopf 2 ist zum Ausfräsen der jeweils oben liegenden Durchbrechung (hier 1b) in drei Dimensionen bewegbar, wie anhand der Figuren 2 und 3 näher gezeigt wird. In Fig. 1 ist nur die Bewegung in einer Dimension (links - rechts) dargestellt.

Das Fräswerkzeug 27 ist an einem Fräskopf 2 angeordnet, welcher seinerseits an einem Schlitten 6 befestigt ist. Es folgt in seiner Bewegung einem Kopierstift 21, der in Durchbrüche 20 einer Schablone 19 eingreift. Der Kopierstift 21 ist in einer Aufnahme 22 aufgenommen, welche an einem weiteren Schlitten 30 befestigt ist. Wenn der weitere Schlitten 30 fest mit dem Schlitten 6 verbunden ist, folgt das Fräswerkzeug 27 genau der Bewegung des Kopierstifts 21. Durch Abtasten der Durchbrüche 20 in der Schablone 19 folgt der am Querschlitten 6 befestigte Fräskopf 2 den vorgegebenen Formen und überträgt diese als Durchbrüche 1a, 1b, 1c in das Hohlprofil 1.

Erfindungsgemäß befindet sich nun auf diesem Schlitten 6 ein zweiter Schlitten, der sogenannte weitere Schlitten 30, der fest mit dem Gehäuse 22 und dem Kopierstift 21 verbunden ist. Der weitere Schlitten 30 ist am Schlitten 6 nach rechts und links verfahrbar angeordnet und ist in seiner Stellung fixierbar. Der weitere Schlitten 30 kann so auf unterschiedliche Abstände gegenüber dem Anschlag 26 des Schlittens 6 gebracht werden. Dazu dient hier der Mehrfachanschlag oder Revolveranschlag 23, der mehrere Anschlagschrauben 25 - bei dem hier gewählten Ausführungsbeispiel sechs Schrauben, wovon nur zwei in Fig. 1 sichtbar sind - enthält, die unterschiedlich tief eingeschraubt und gegebenenfalls fixiert sind. Der Revolveranschlag 23 ist um die Achse 24 verdrehbar und kann in unterschiedlichen Stellungen einrasten. Je nachdem, welche der sechs Schrauben 25 zwischen Achse 24 und Anschlag 26 steht, ergibt sich ein unterschiedlicher Abstand zwischen Kopierstift 21 und Werkzeug 27. Dadurch kann der Abstand zwischen dem Kopierstift 21 und dem Fräswerkzeug 27 verstellt und so dem jeweiligen Dornmaß X des Herstellers angepaßt werden. Eine Umstellung von einem Dornmaß X auf ein anderes erfolgt durch Lösen der Fixierung und Verdrehen des Revolveranschlags 23 um die Achse 24, wodurch eine andere Anschlagschraube 25 in Wirkstellung gegenüber dem Anschlag 26 kommt und dadurch ein anderes Dornmaß X eingestellt wird.

Fig. 1 zeigt rechts unten eine Draufsicht auf die Schablone 19 mit den drei Aussparungen 20a,b,c, wobei die Aussparung 20a einen Schloßkasten abbildet, die Aussparung 20b ein Drückerloch und die dritte Aussparung 20c die Öffnung für einen Schließzylinder bildet. Das Dornmaß X ist als Abstand der Mittellinien eingezeichnet.

Figur 2 zeigt eine erfindungsgemäße Vorrichtung zur Bearbeitung des Hohlprofils 1, z.B. eines Tür- oder Fensterrahmens oder eines beliebigen anderen stabförmigen Werkstücks, in einer Seitenansicht. Die Vorrichtung weist ein Maschinengestell 3 mit einer Fräsbank 4 auf, auf welcher ein Längsschlitten 5 längs verfahrbar ist. Auf dem Längsschlitten 5 ist ein Querschlitten 6 quer verfahrbar gelagert, an welchem ein Tiefensupport 7 befestigt ist, an der der Fräskopf 2 auf und ab verfahrbar ist. Das Fräswerkzeug 27 ist also gegenüber dem Maschinengestell 3 in allen drei Dimensionen des Raumes verfahrbar. Möglich sind selbstverständlich auch andere Ausgestaltungen der Lagerung der Bearbeitungseinheit 2. Es müssen keine Schlitten sein, wie hier gezeigt, es sollte jedoch immer eine Bewegbarkeit des Fräswerkzeuges 27 in allen drei Raumrichtungen möglich sein.

Zur Aufnahme des stabförmigen Hohlprofils 1 sind bei dem hier gewählten Ausführungsbeispiel Spannelemente 10 vorgesehen. Jedes dieser Spannelemente 10 ist an einem Haltearm 15 befestigt, der in einer an der Fräsbank 4 bzw. dem Maschinengestell 3 angeordneten Schiene 9 in Längsrichtung verschiebbar ist. Dazu sind die Konsolen 14 bzw. die Haltearme 15 über U-förmige Führungen an der Schiene 9 längsverschieblich gelagert. Die Spannelemente 10 weisen Spannzylinder 11 auf, die ein Einklemmen des Werkstücks 1 erlauben.

Die Spannelemente 10 sind jeweils mit einer Rastscheibe 12 verbunden, deren Drehachse 13 über eine Konsole 14 am Haltearm 15 gelagert ist. Die Rastscheibe 12 weist drei um 90° gegeneinander versetzt angeordnete Aussparungen 18 auf. An den Haltearmen 15 jedes Spannelements 10 befindet sich bei dem hier gewählten Ausführungsbeispiel ein Rastzylinder 16, mittels welchem ein Rastbolzen 17 in eine Aussparung 18 der Rastscheibe 12 in Eingriff gebracht werden kann. Durch Lösen des Rastbolzens 17 und Verdrehen der Spannelemente 10 um 90° oder um 180° kann so das von den Spannelementen 10 gehaltene Werkstück 1 um 90° oder 180° verdreht werden, so daß jeweils die zu bearbeitende Seite dem Werkzeug 27 des Fräskopfes 2 zugewandt ist. Einzelheiten dieses verdrehbaren Spannsystems sind der EP 934 800 A1 zu entnehmen.

Am Maschinengestell 3 ist die abzutastende Schablone 19 gehalten, welche Aussparungen 20 für die auf das Werkstück 1 zu übertragenden Fräsbilder aufweist. In eine der Aussparungen 20 greift in Fig. 2 der Kopierbolzen 21 ein, welcher auf dem Querschlitten 6 verschiebbar gelagert ist. Mit dem Kopierbolzen 21 bzw. seiner Aufnahme 22 ist der weitere Schlitten 30 fest verbunden. Dieser trägt einen Mehrfachanschlag, bei dem hier gewählten Ausführungsbeispiel den Revolveranschlag 23. Der Revolveranschlag 23 ist um die Achse 24 drehbar gelagert, welche ortsfest bezüglich der Aufnahme 22 angeordnet ist. An dem Revolveranschlag 23 befinden sich sechs Anschlagschrauben 25, von denen eine bei entsprechender Positionierung mit dem Gegenanschlag 26 in Wirkstellung tritt. Der Gegenanschlag 26 ist fest mit dem Querschlitten 6 verbunden. Die Anschlagschrauben 25 lassen sich auf unterschiedliches Maß aus dem Revolveranschlag 23 herausdrehen, so daß sich bei unterschiedlichen anliegenden Anschlagschrauben 25 unterschiedliche Abstände zwischen der Achse des Werkzeugs 27 und dem Kopierbolzen 21 einstellen lassen. Diese unterschiedlichen Abstände entsprechen unterschiedlichen Dornmaßen X, wie sie in Figur 1 definiert sind.

Die Verstellung (um jeweils 60° bei sechs Anschlagschrauben 25) und die Fixierung des Revolveranschlages 23 erfolgen mittels eines Handhebels 28, wodurch der Revolveranschlag 23 und damit der weitere Schlitten 30 auf dem Schlitten 6 festgeklemmt werden können.

Selbstverständlich sind auch andere Festlegungsarten zwischen Schlitten 30 und Schlitten 6 möglich. So können unterschiedliche Verrastungssysteme vorgesehen sein, die z.B. federbelastet arbeiten.

Durch die Erfindung ist erreicht, daß eine Vielzahl von Dornmaßen (bei dem hier gezeigten Beispiel sechs Dornmaße) eingestellt werden können, wobei nur eine einzige Schablone 19 benötigt wird. Hierbei ist zu berücksichtigen, daß die Ausfräsungen für den Schloßkasten, den Profilzylinder oder die Druckerlöcher usw. von der Form her jeweils gleich sind, lediglich in ihrem Abstand variieren, wobei das Dornmaß X die entsprechende Abstandsvorgabe gibt, die von Hersteller zu Hersteller unterschiedlich ist. Bei unterschiedlicher Einstellung des Abstandes zwischen Kopierstift 21 und Werkzeug 27 kann so den Vorgaben unterschiedlicher Hersteller mit einer einzigen Schablone Rechnung getragen werden.

Will der Benutzer in einem Hohlprofil Einfräsungen einbringen, deren Abstände ein anderes Dornmaß X als die vorher eingebrachten Einfräsungen haben, so muß er lediglich den Handhebel 28 öffnen, wodurch der Schlitten 30 gegenüber dem Schlitten 6 verschiebbar wird. Danach wird der Revolveranschlag 23 um die Achse 24 so weit gedreht, bis die gewünschte Anschlagschraube 25 gegen den Anschlag 26 gerichtet ist. Der Schlitten 30 wird dann so weit nach links verfahren, daß die Schraube 25 am Anschlag 26 anliegt. Danach wird der Handhebel 28 wieder angezogen, wodurch die beiden Schlitten 30 und 6 wieder fest miteinander verbunden sind. Die Vorrichtung ist sodann auf das neue Dornmaß X eingestellt und das Einfräsen der neuen Durchbrüche kann erfolgen.

Zusätzlich zum Fräskopf 2 gemäß Figur 1 ist in Fig. 2, 3 eine Bohreinheit 29 vorgesehen, welche unabhängig von dem Fräser tiefenverstellbar ist. Hierdurch ist realisiert, daß beim Einsatz des Fräswerkzeuges 27 der Bohrer nicht hindert und umgekehrt. Der zusätzliche Höhensupport für die Bohrmaschine 29 gegenüber dem Höhensupport für den Fräskopf 2 erlaubt ein Arbeiten mit beiden Einrichtungen unabhängig voneinander.

Figur 3 zeigt eine Draufsicht auf die Vorrichtung der Fig. 2, wobei hier besonders gut der Revolveranschlag 23 mit seinen sechs unterschiedlichen Anschlagschrauben 25 zu erkennen ist. Nach Lösen des Handhebels 28 kann der Revolveranschlag 23 um seine Achse 24 verdreht werden, so daß eine andere Schraube 25 gegen den Anschlag 26 gerichtet ist. Nach Anziehen des Handhebels 28 sind die beiden Schlitten 6 und 30 gegeneinander fixiert. Die Vorrichtung ist nun auf ein anderes Dornmaß X eingestellt und bereit, die Durchbrechungen 20 durch den Kopierstift 21 von der Schablone 19 abzutasten auf den Fräskopf 2 so zu übertragen, daß die abgetasteten Formen auf das Werkstück 1 übertragen werden und so entsprechende Durchbrüche 1a, 1b an den vom Hersteller angegebenen Stellen eingefräst werden.

Ein weiterer Vorteil der erfindungsgemäßen eindimensionalen Verstellbarkeit ist, daß die Schablone 19 mit vielen Fräs- und Bohrbildern auf ihrer gesamten Breite versehen werden kann, da der Benutzer stets den Abstand zwischen Kopierstift 21 und Achse des Fräswerkzeugs 27 und/oder einer Bohreinheit 29 verstellen kann.

Auch dem der Bohreinheit 29 zugeordnete Kopierstift 31 beziehungsweise dessen Aufnahme ist mit dem weiteren Schlitten 30 verbunden, so daß gleichzeitig mit er Einstellung des Dornmaßes X für den Fräskopf 2 auch das entsprechende Maß für die Bohreinheit 29 eingestellt ist. Durch den Revolveranschlag 23 werden damit beide Kopierstifte 21, 31 gleichzeitig und parallel zu dem jeweiligen Werkzeug 2, 29 verstellbar.

### Bezugszeichenliste

- 1: Hohlprofil
- 1a: Durchbruch
- 1b: Durchbruch
- 1c: Durchbruch
- 2: Fräskopf
- 3: Maschinengestell
- 4: Fräsbank
- 5: Längsschlitten
- 6: Querschlitten
- 7: Tiefensupport
- 9: Schiene
- 10: Spannelement
- 11: Spannzylinder
- 12: Rastscheibe
- 13: Drehachse
- 14: Konsole
- 15: Haltearm
- 16: Rastzylinder
- 17: Rastbolzen
- 18: Aussparung
- 19: Schablone
- 20: Aussparung
- 20a: Schloßkastenaussparung
- 20b: Drückerloch
- 20c: Schließzylinderöffnung
- 21: Kopierstift
- 22: Gehäuse
- 23: Revolveranschlag
- 24: Drehachse
- 25: Anschlagschraube
- 26: Gegenanschlag
- 27: Werkzeug
- 28: Handhebel
- 29: Bohreinheit
- 30: weiterer Schlitten
- 31: Kopierstift

## Patentansprüche

1. Vorrichtung zum Bearbeiten von Hohlprofilen (1) oder dgl. stabförmigen Werkstücken mit einer an einem Maschinengestell (3) über mehrere Schlitten (5,6,7) verfahrbaren Bearbeitungseinheit (2) und einer Kopiereinrichtung mit einem in eine Schablone (19) eintauchenden Kopierstift (21) zur Übertragung eines Fräsbildes auf das Werkstück, wobei der Kopierstift (21) gegenüber der Bearbeitungseinheit verstellbar ist, **dadurch gekennzeichnet, daß** der Kopierstift (21) an einem Schlitten (6) geführt ist und daß dem Kopierstift (21) ein Mehrfachanschlag (23) zugeordnet ist, der mit einem Gegenanschlag (26) so zusammenwirkt, daß der Abstand zwischen Bearbeitungseinheit (2) und Kopiereinrichtung auf unterschiedliche Werte einstellbar ist.

2. Vorrichtung nach Anspruch 1, **dadurch gekennzeichnet, daß** der Mehrfachanschlag als Revolveranschlag (23) ausgebildet ist.

3. Vorrichtung nach Anspruch 1 oder 2, **dadurch gekennzeichnet, daß** der Mehrfachanschlag (23) verstellbare Anschläge, insbesondere Anschlagschrauben (25) aufweist, welche mit dem Gegenanschlag (26) in Wirkstellung treten.

4. Vorrichtung nach einem der vorhergehenden Ansprüche, **dadurch gekennzeichnet, daß** die Einstellung des Abstandes zwischen Bearbeitungseinheit und Kopiereinrichtung über Rastungen erfolgt.

5. Vorrichtung nach einem der vorhergehenden Ansprüche, **dadurch gekennzeichnet, daß** wenigstens zwei verfahrbare Bearbeitungseinheiten (2, 29) vorgesehen sind mit jeweils einem Kopierstift (21, 31), wobei die Kopierstifte (21, 31) der wenigstens zwei Bearbeitungseinheiten (2, 29) mit einem gemeinsamen Mehrfachanschlag (23) zusammenwirken, so daß der Abstand zwischen den Bearbeitungseinheiten (2, 29) und der zugeordneten Kopiereinrichtung gleichzeitig und parallel einstellbar ist.

## Claims

1. Device for processing hollow profile members (1) or like rod-shaped workpieces, with a processing unit (2), which is movable at a machine frame (3) by way of several slides (5, 6, 7), and a copying device with a copying pin (21), which engages into a template (19), for transmission of a milling pattern to the workpiece, wherein the copying pin (21) is adjustable relative to the processing unit, **characterised in that** the copying pin (21) is guided at a slide (6) and that the copying pin (21) is associated with a multiple abutment (23) which so co-operates with a counter-abutment (26) that the spacing between processing unit (2) and copying device is adjustable to different values.

2. Device according to claim 1, **characterised in that** the multiple abutment is constructed as a turret abutment (23).

3. Device according to claim 1 or 2, **characterised in that** the multiple abutment (23) comprises adjustable abutments, particularly abutment screws (25), which come into operative setting with the counter-abutment (26).

4. Device according to one of the preceding claims, **characterised in that** the setting of the spacing between processing unit and copying device is carried out by way of detents.

5. Device according to one of the preceding claims, **characterised in that** at least two movable processing units (2, 29) are provided each with a respective copying pin (21, 31), wherein the copying pins (21, 31) of the at least two processing units (2, 29) co-operate with a common multiple abutment (23) so that the spacing between the processing units (2, 29) and the associated copying device is sellable simultaneously and in parallel.

## Revendications

1. Dispositif pour l'usinage de profilés creux (1) ou de pièces analogues en forme de barres, avec une unité d'usinage (2) pouvant être déplacée sur un bâti de machine (3) au moyen de plusieurs coulisseaux (5, 6, 7), et avec un équipement de copiage comportant un doigt de copiage (21) s'enfonçant dans un gabarit (19) pour transférer un dessin de fraisage sur la pièce, le doigt de copiage (21) pouvant être déplacé par rapport à l'unité d'usinage, **caractérisé en ce que** le doigt de copiage (21) est guidé sur un coulisseau (6) et **en ce qu'**une butée multiple (23) est associée au doigt de copiage (21), laquelle coopère avec une contre-butée (26) de telle sorte que la distance entre l'unité d'usinage (2) et l'équipement de copiage peut être réglée à différentes valeurs.

2. Dispositif selon la revendication 1, **caractérisé en ce que** la butée multiple est réalisée sous forme de butée revolver (23).

3. Dispositif selon la revendication 1 ou 2, **caractérisé en ce que** la butée multiple (23) présente des butées réglables, notamment des vis de butée (25), qui entrent en action avec la contre-butée (26).

4. Dispositif selon l'une quelconque des revendications précédentes, **caractérisé en ce que** le réglage de la distance entre l'unité d'usinage et l'équipement de copiage s'effectue au moyen de crantages.

5. Dispositif selon l'une quelconque des revendications précédentes, **caractérisé en ce qu'**il est prévu au moins deux unités d'usinage mobiles (2, 29) pourvues chacune d'un doigt de copiage (21, 31), les doigts de copiage (21, 31) des au moins deux unités d'usinage (2, 29) coopérant avec une butée multiple commune (23), de sorte que la distance entre les unités d'usinage (2, 29) et l'équipement de copiage associé peut être réglée simultanément et en parallèle.
